# EUROPEAN PATENT APPLICATION

(11) **EP 4 389 572 A1**
(43) Date of publication of application: **26.06.2024**
(21) Application number: 22216607.6
(22) Date of filing: 23.12.2022
(51) Int. Cl.: B62H 3/04, B62H 3/02, B62H 3/10, B62H 5/06, B62M 6/80, B62K 21/02, B60L 53/12, B60L 53/14, B60L 53/34, E05B 71/00, B62H 3/08, B62K 3/00, B62H 3/00

(54) **MICROMOBILITY DEVICE STORAGE SYSTEM**

(71) Applicant: Donkeyrepublic Holding A/S, 1717 Copenhagen V (DK)
(72) Inventor: OVACIK, Erdem, 1717 Copenhagen V (DK); MERCAT, Laurent, 1717 Copenhagen V (DK); FRANDSEN, Jens Kjærby, 1717 Copenhagen V (DK); RASMUSSEN, Mette Østrup, 1717 Copenhagen V (DK); ABU, Timothy, 1717 Copenhagen V (DK); ROSSKELLY, Drew Wahlberg, 3520 Farum (DK); GARIN, Juan Manuel, 3520 Farum (DK)
(74) Representative: Guardian IP Consulting I/S

(57) **Abstract**

Each micromobility device is provided with a locking device for engagement with a docking station (4). Each locking device includes two opposed displaceable locking pins (5) arranged in a separate locking housing (14) attached to the micromobility device. The locking housing encloses an actuator, a drivetrain, and an electric power receiver and has two opposed end walls (15) and a peripheral wall. Each end wall has a central opening in which a respective locking pin is arranged extendable and retractable. The electric power receiver is arranged at a peripheral area of an end wall. A receiving space (11) of each docking station is adapted to receive the locking housing and has corresponding locking recesses arranged centrally in internally opposed walls. An electric power transmitter is arranged at a peripheral area of an internal wall of the receiving space.

## Description

The present invention relates to a micromobility device storage system including a number of micromobility devices, such as e-bikes or e-scooters, and a number of docking stations for the micromobility devices, each micromobility device being provided with a locking device for engagement with a docking station, each locking device including two opposed displaceable locking pins which by means of an actuator and a drivetrain are operable between a locked position in which the locking pins are at least partially extended from the locking device in order to engage corresponding locking recesses arranged in a receiving space of a docking station and an unlocked position in which the locking pins are at least partially retracted into the locking device in order to disengage the corresponding locking recesses of the docking station, each locking device including an electric power receiver adapted to receive electric power from a corresponding electric power transmitter of the docking station.

WO 2010/058127 A1 relates to a bicycle storage and locking system, which includes a plurality of cycles and at least one storage station including a plurality of storage and locking points, while the system includes means for locking each one of the cycles to one of the storage and locking points, each one of the storage points being made up of two arms, forming between them a space in which the front wheel of the cycle is intended to be inserted when positioning the cycle, while the means for locking each one of the cycles are made up of two laterally mobile side projections engaging with two locking recesses. The cycle includes the two mobile locking projections and the storage point includes the two concave locking recesses. A fork head is formed by a transverse block, where the fork head comprises the system for locking the bicycle on the storage post with its two locking projections intended to cooperate with the corresponding hollow housings. In an embodiment, the mobile locking projections may be adapted to conduct electric current between the storage station and an electrically driven cycle for charging a battery of the cycle. However, this locking system is complicated and not easily adaptable to different bicycles and other micromobility devices due to the integration into the fork head of the bike. The system does only allow for relatively small variations in the height of the surface on which the bike is parked. Furthermore, a relatively high storage station is required for each bike to be stored.

EP 1 820 722 B2 discloses an automatic bicycle storage system having a set of cycles each carrying a locking part. Each of a set of fixed locking stations has a strike adapted to receive the locking part of one of the cycles and to retain the locking part by means of a latch operable by means of an actuator arranged in the locking station. The strike and locking part may include electric contact points for charging an electric bike. Each cycle has an anti-theft device in the form of a cable lock allowing a user to temporarily lock the cycle. Even though the locking part is arranged adjustably on the cycle, the system does only allow for relatively small variations in the height of the surface on which the cycle is parked. The fact that each locking station is provided with a latch operated by an actuator may be a disadvantage if several locking stations are required. Furthermore, a relatively high locking station is required for each bike to be locked.

EP 2 399 817 B1 discloses a stand with a clamping device by means of which a bike is supported on a floor. The contour of a coupling arranged under the saddle of the bike is adapted to the outer contour of an upwardly projecting locking head arranged on a support arm of the stand in such a way that the locking head can be attached to the coupling through an insertion, engagement or detent effect. An energy transfer device is provided in the locking head and in the coupling, the parts of which interact with one another in each case. The energy transfer device may function by means of coils. The locking head of the stand is manually lowered before engagement with the coupling of the bike. However, in order to engage the locking head of the stand with the coupling under the saddle of the bike, the user, standing to one side of the bike, has to pull the bike in backwards direction and at the same time push the support arm with the locking head in downward direction. Therefore, the procedure of parking a bike is awkward and the system is not very user-friendly. Although denoted a locking head, the document does not describe any features actually locking the bike to the stand in order to prevent theft.

EP 2 955 092 B1 relates to a system for attaching and recharging electric bicycles for hire wherein the electric bicycles are attached to parking posts or bases. An attachment included in the parking post or base is complementary to an attachment provided in the front portion of the bicycle, under the handlebar thereof. The attachment provided on the parking post or base includes a support structure on which there are mounted a permanent electromagnet, a ball bolt fastener, side non-return elements, a low-friction guide to facilitate positioning the bicycle on the parking post or base, male contactors, and a magnetic sensor. However, this system is rather bulky and does not allow for variations in the height of the surface on which the bike is parked. Each parking post or base is provided with a complicated electro-mechanical system which may be a disadvantage if several parking posts or bases are required. Furthermore, a relatively high storage station is required for each bike to be stored. A further development of this system is described in EP 3 327 685 B1.

WO 2020/125833 A1 discloses an anti-theft arrangement for a bicycle and a stationary bicycle stand. By means of an actuator, an interlocking element of the stand is vertically or horizontally displaceable in order to engage a bicycle-side coupling portion.

The object of the present invention is to provide a micromobility device storage system with simple and functional locking and charging capabilities being easily adaptable to different types of micromobility devices.

In view of this object, each locking device is arranged in a separate locking housing attached to the respective micromobility device, in that the locking housing encloses the actuator, the drivetrain, at least a part of each locking pin, and at least a part of the electric power receiver, in that the locking housing has two opposed end walls and a peripheral wall, in that each end wall has a central opening in which a respective locking pin is arranged extendable and retractable in relation to the end wall between its locked position and its unlocked position, in that the electric power receiver is arranged at a peripheral area of at least a first one of the end walls, in that the receiving space of each docking station is adapted to receive the locking housing, in that the receiving space has two internally opposed and at least substantially parallel walls having a mutual distance allowing the end walls of the locking housing to slide along the respective internally opposed walls of the receiving space, in that a corresponding locking recess is arranged centrally in each one of the internally opposed walls of the receiving space, and in that the electric power transmitter is arranged at a peripheral area of at least a first one of the internally opposed walls of the receiving space.

In this way, by providing a separate locking housing enclosing the actuator, the drivetrain, at least a part of the two opposed locking pins, and at least a part of the electric power receiver, and by providing a receiving space of each docking station adapted to receive the locking housing and including the electric power transmitter, the locking and charging system may be adapted to different types of micromobility devices, such as e-bikes or e-scooters. By integrating the charging capabilities into the locking system near the locking pins, the system may allow for relatively large variations in the height of the surface on which the bike is parked without affecting the charging capabilities. If for example a user lifts the rear part of a locked e-bike or e-scooter, the whole vehicle may rotate about the locking pins, but because the charging interface is arranged just at the locking pins, the charging interface only needs to accept a certain degree of flexibility. Furthermore, the separate locking housing may be arranged relatively low on the micromobility devices, thereby providing for relatively low storage stations. Thereby, less material may be required.

In an embodiment, each micromobility device includes a front wheel having a front wheel axis and a rear wheel having a rear wheel axis, the two opposed locking pins are displaceable along a locking pin axis, and wherein, at least when the front wheel axis is arranged in parallel with the rear wheel axis, the locking pin axis is generally arranged in front of and generally parallel to the front wheel axis. Thereby, a user may lift the rear part of a locked e-bike or e-scooter without damaging the system, because the whole vehicle may simply rotate about the locking pins and thereby lift the front wheel somewhat from the surface. If, on the contrary, the locking pin axis is generally arranged behind the front wheel axis, lifting the rear part of a locked e-bike or e-scooter will also rotate the vehicle about the locking pins, but will thereby press the front wheel downwards into the surface which could put stress on the system.

In an embodiment, each micromobility device includes a front wheel having a front wheel axis and a rear wheel having a rear wheel axis, the front wheel axis and the rear wheel axis being spaced by a nominal wheel axis distance, the two opposed locking pins are displaceable along a locking pin axis, the locking pin axis is generally arranged at a nominal locking distance from the front wheel axis, and the nominal locking distance is smaller than 40 per cent of the nominal wheel axis distance. Thereby, if a user lifts the rear part of a locked e-bike or e-scooter, the stress experienced by the system will may reduced. Preferably, the nominal locking distance is smaller than 30 per cent of the nominal wheel axis distance. Thereby, if a user lifts the rear part of a locked e-bike or e-scooter, the stress experienced by the system may be further reduced. Most preferred, the nominal locking distance is smaller than 20 per cent of the nominal wheel axis distance. Thereby, if a user lifts the rear part of a locked e-bike or e-scooter, the stress experienced by the system may be minimised.

In an embodiment, at least some of the micromobility devices are e-bikes, and wherein, for the e-bikes, the nominal locking distance is smaller than 25 per cent of the nominal wheel axis distance. Thereby, if a user lifts the rear part of a locked e-bike, the stress experienced by the system may be reduced. Preferably, the nominal locking distance is smaller than 20 per cent of the nominal wheel axis distance. Thereby, if a user lifts the rear part of a locked e-bike, the stress experienced by the system may be further reduced. Most preferred, the nominal locking distance is smaller than 15 per cent of the nominal wheel axis distance. Thereby, if a user lifts the rear part of a locked e-bike, the stress experienced by the system may be minimised.

In an embodiment, the locking housing is at least partly disc-shaped, at least a part of the peripheral wall of the locking housing has the form of an arc of a circle, and said part of the peripheral wall, in a locked position of the locking housing in the receiving space of the docking station, at least substantially matches a corresponding part of an internal peripheral wall of the receiving space also having the form of an arc of a circle. Thereby, the locking housing may in a stable way be supported rotatably in the receiving space.

In an embodiment, the locking housing is generally disc-shaped and has a maximum diameter, wherein, in the unlocked position of the locking pins, a distance between outer ends of the locking pins is less than 75 per cent, preferably less than 65 per cent and most preferred less than 60 per cent of the maximum diameter of the locking housing. Thereby, the locking housing may be reliably guided into the receiving space of the docking station.

In an embodiment, at least a part of the peripheral wall of the locking housing has a radial cross-section forming a concave or a convex form matching a corresponding concave or convex form of a corresponding part of an internal peripheral wall of the receiving space. Thereby, the locking housing may be even more reliably guided into the receiving space of the docking station.

In an embodiment, each docking station has an oblique ramp section arranged below the receiving space of the docking station and leading up to said receiving space. Thereby, even if the micromobility device should have a flat tyre, the locking housing may be reliably guided up to and into the receiving space of the docking station.

In an embodiment, a cross-section of the ramp section has a concave or a convex form corresponding to the concave or convex form of said part of the internal peripheral wall of the receiving space. Thereby, if the micromobility device should have a flat tyre, the locking housing may be even more reliably guided up to and into the receiving space of the docking station.

In an embodiment, the two opposed displaceable locking pins are driven between their locked position and their unlocked position by means of a drive spindle having a first spindle part engaging an internal thread of a first one of the locking pins and a second spindle part engaging an internal thread of a second one of the locking pins, the first spindle part has a different thread direction than the second spindle part, and a toothed wheel forming part of the drivetrain is arranged on the drive spindle between the first spindle part and the second spindle part. Thereby, a very compact locking housing may be achieved.

In an embodiment, each micromobility device has a frame, the respective locking housing is attached directly or indirectly to the frame of the micromobility device by means of a connecting bracket including a plate-formed part matching and being arranged on a second one of the end walls of the locking housing, said plate-formed part has a central opening through which a respective locking pin may project, and the connecting bracket includes a connector connecting directly or indirectly to the frame. Thereby, the locking housing may be attached to the frame of the micromobility device in an easy and safe way. The respective locking pin projecting through said plate-formed part may ensure that the locking housing is locked safely to the plate-formed part attached to the micromobility device.

In an embodiment, at least some of the micromobility devices are e-bikes having a bike fork holding a front wheel, the bike fork has a first fork blade and a second fork blade joined at their top, each fork blade has a fork end holding an end of an axle of the front wheel, said connecting bracket includes an axle holding part forming the fork end of the first fork blade, and the connector of said connecting bracket has the form of a fork blade connector connected to a lower end of the first fork blade. Thereby, the locking housing may in a safe way be arranged close to the front wheel axis, thereby reducing the stress experienced by the system, if a user should lift the rear part of a locked e-bike. Furthermore, because in this way, the connecting bracket actually replaces a part of the first fork blade, even if it were removed from the e-bike, the bike would not be functional any more. However, the connecting bracket may typically be welded to the first fork blade, thereby preventing removal efficiently.

In an embodiment, a connecting bracket cover includes a plate-formed part covering the plate-formed part of the connecting bracket, the plate-formed part of the connecting bracket cover has a central opening through which the respective locking pin may project, and the connecting bracket cover includes a fork blade covering part covering an inner side of the lower end of the first fork blade. Thereby, the connection between the connecting bracket and the first fork blade may be reinforced.

The invention will now be explained in more detail below by means of examples of embodiments with reference to the very schematic drawing, in which
Fig. 1 is a perspective view of part of a micromobility device storage system according to the present invention, in the form of an e-bike parked in a docking station;
Fig. 2 is a perspective view of a micromobility device storage system according to the present invention, including several e-bikes parked in respective docking stations as illustrated in Fig. 1, the docking stations being connected to each other;

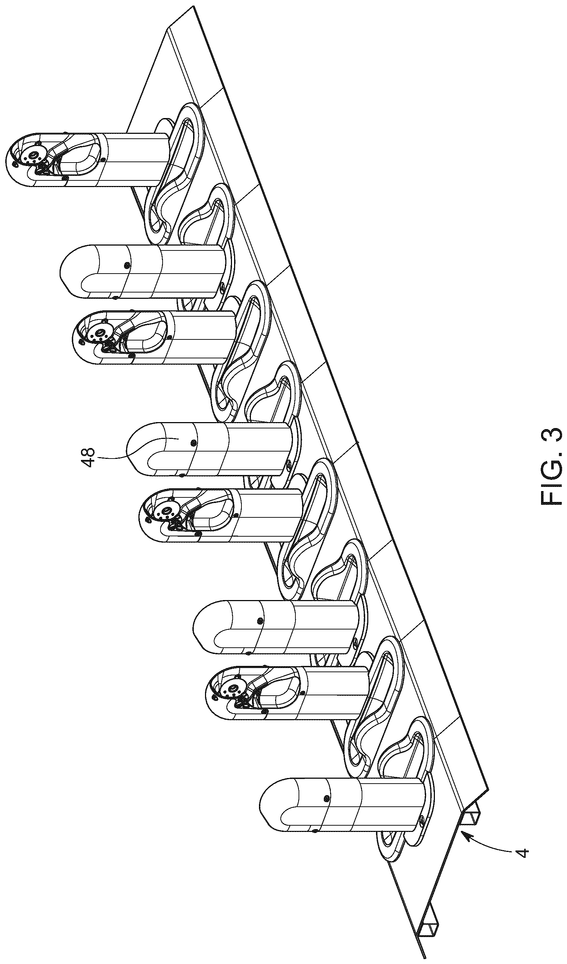

Fig. 3 is a perspective view of a number of interconnected docking stations of a micromobility device storage system according to the present invention, every other docking station being arranged 180 degrees rotated about a vertical axis in order to allow micromobility devices to be parked from both sides of the row of interconnected docking stations, as illustrated in Fig. 4;
Fig. 4 is a perspective view of a micromobility device storage system according to the present invention, including several e-bikes parked in respective docking stations arranged as illustrated in Fig. 3;
Fig. 5 is a perspective view of a micromobility device storage system according to the present invention, including an e-bike, an e-scooter and a conventional bicycle parked in respective docking stations arranged as illustrated in Fig. 2;
Fig. 6A-6C are perspective views illustrating different steps of parking an e-bike in a docking station as seen in Fig. 1;
Fig. 7 is a perspective view of a bike fork holding a front wheel and being provided with a locking housing of a micromobility device storage system according to the present invention;
Fig. 8 is a perspective exploded view of the bike fork, front wheel and locking housing of Fig. 7;
Fig. 9 is a perspective exploded view of the bike fork and locking housing of Fig. 8, seen from a different angle;
Fig. 10 is a perspective exploded view of the locking housing seen in Figs. 6A-6C, including wireless charging;
Fig. 11 is a perspective exploded view of the locking housing seen in Figs. 7-9, including contact charging;
Fig. 12 is a top view of the locking housing seen in Figs. 7-9;
Fig. 13 is a side view of the locking housing seen in Figs. 7-9;
Fig. 14A is a perspective, partially sectional view illustrating the locking housing seen in Figs. 7-9, in an unlocked state;
Fig. 14B is a perspective, partially sectional view illustrating the locking housing seen in Figs. 7-9, in a locked state;
Fig. 15A is a perspective view illustrating some of the internal parts of the locking housing seen in Figs. 7-9, in an unlocked state;
Fig. 15B is a perspective view illustrating some of the internal parts of the locking housing seen in Figs. 7-9, in a locked state;
Fig. 16A is a vertical section of a docking station and a corresponding locking housing inserted therein, according to the present invention, in an unlocked state;
Fig. 16B is a vertical section of a docking station and a corresponding locking housing inserted therein, according to the present invention, in a locked state;
Fig. 17 is a side view of a docking station according to the present invention;
Fig. 18 is a perspective view of the docking station illustrated in Fig. 17, as seen, adapted for contact charging;
Fig. 19 is a perspective, exploded view of the docking station illustrated in Fig. 18, adapted for contact charging; and
Fig. 20 is a perspective, exploded view of a docking station corresponding to that illustrated in Fig. 19, however, adapted for wireless charging.

In the following, generally, similar elements of different embodiments have been designated by the same reference numerals.

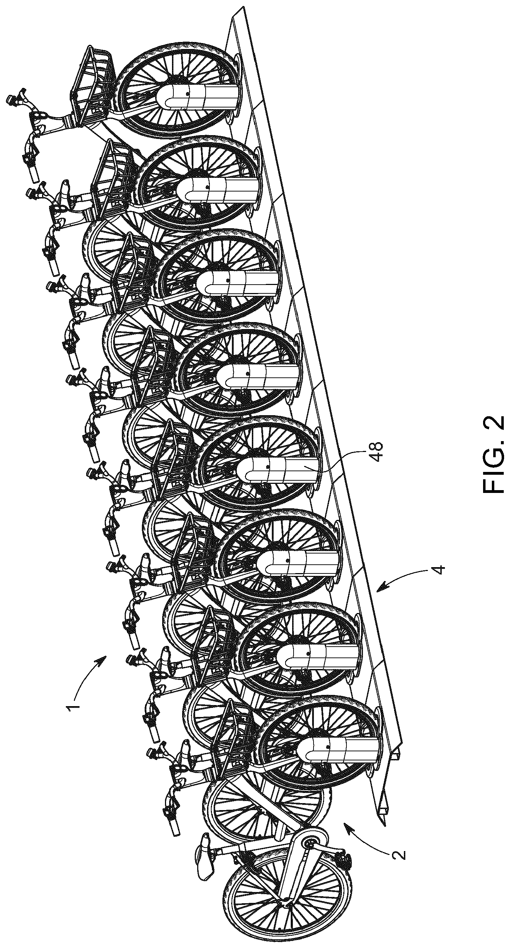

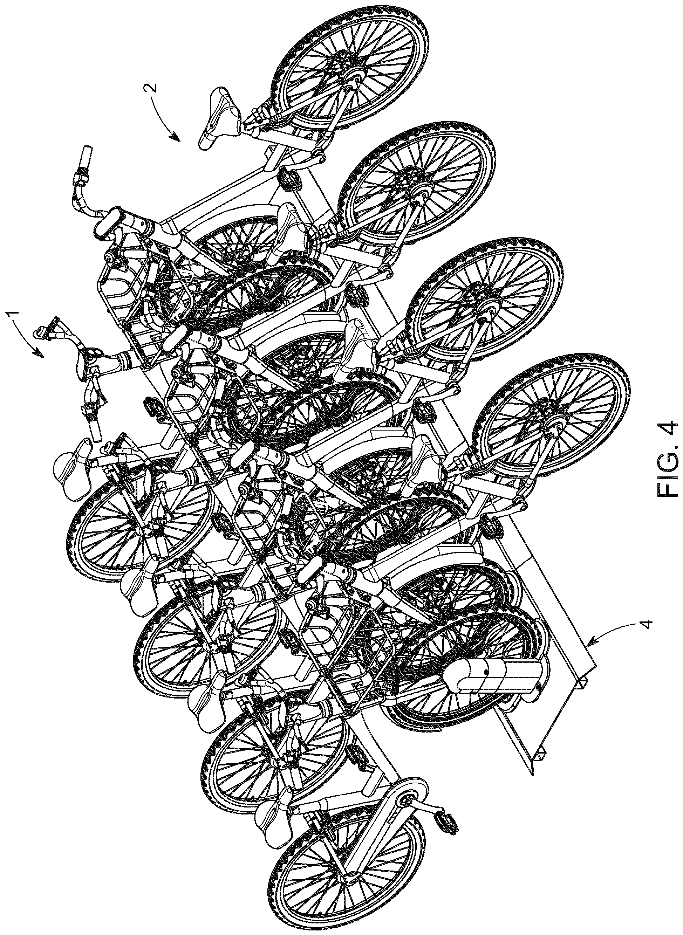

Figs. 2, 4 and 5 illustrate different examples of micromobility device storage systems 1 according to the present invention. The micromobility device storage systems 1 may include a number of different micromobility devices 2, 3, such as e-bikes 2 or e-scooters 3, and a number of docking stations 4 for the micromobility devices.

Micromobility refers to a range of small, lightweight vehicles operating at speeds typically below 25km/h (15mph) and driven by users personally. Micromobility devices include among others bicycles, e-bikes, electric scooters, electric skateboards, shared bicycle fleets, and electric pedal assisted (pedelec) bicycles.

E-bikes and e-scooters are technically known as "motorized micromobility devices." They are powered by electricity, which is usually provided by a lithium-ion battery. E-bikes can have a motor that either fully propels the vehicle or assists the rider with pedalling.

Each micromobility device 2, 3 is provided with a locking device for engagement with a docking station 4. Each locking device includes two opposed displaceable locking pins 5, 6 which by means of an actuator 7 and a drivetrain 8 are operable between a locked position in which the locking pins 5, 6 are at least partially extended from the locking device in order to engage corresponding locking recesses 9, 10 arranged in a receiving space 11 of a docking station 4 and an unlocked position in which the locking pins 5, 6 are at least partially retracted into the locking device in order to disengage the corresponding locking recesses 9, 10 of the docking station 4. Furthermore, each locking device includes an electric power receiver 12 adapted to receive electric power from a corresponding electric power transmitter 13 of the docking station 4.

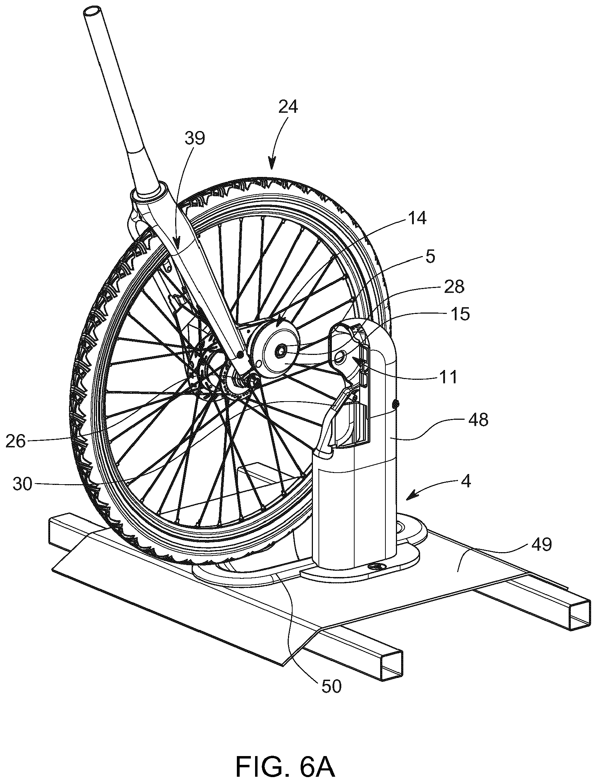

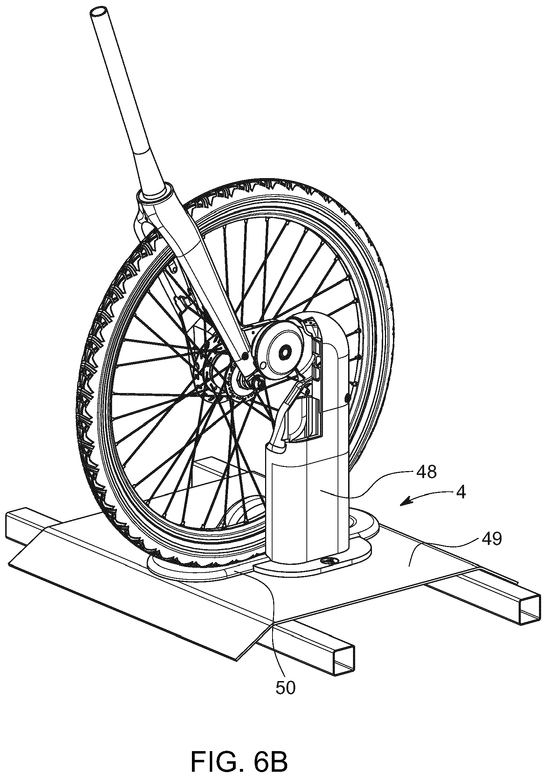

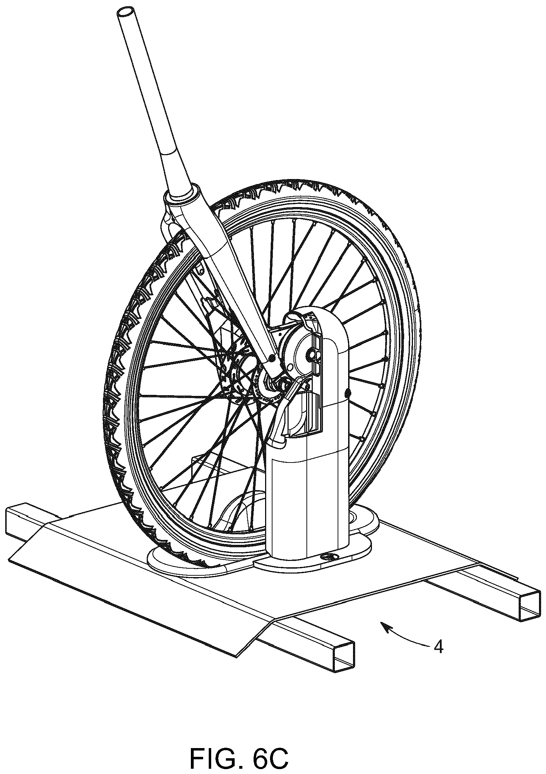

As illustrated in Figs. 6A to 9, 12 and 13 each locking device is arranged in a separate locking housing 14 attached to the respective micromobility device 2, 3. In accordance with the present invention, a separate locking housing is understood to mean a locking housing which is a part separate from, but connected directly or indirectly to, a frame, a bike fork or any other standard element normally included by this type of micromobility device.

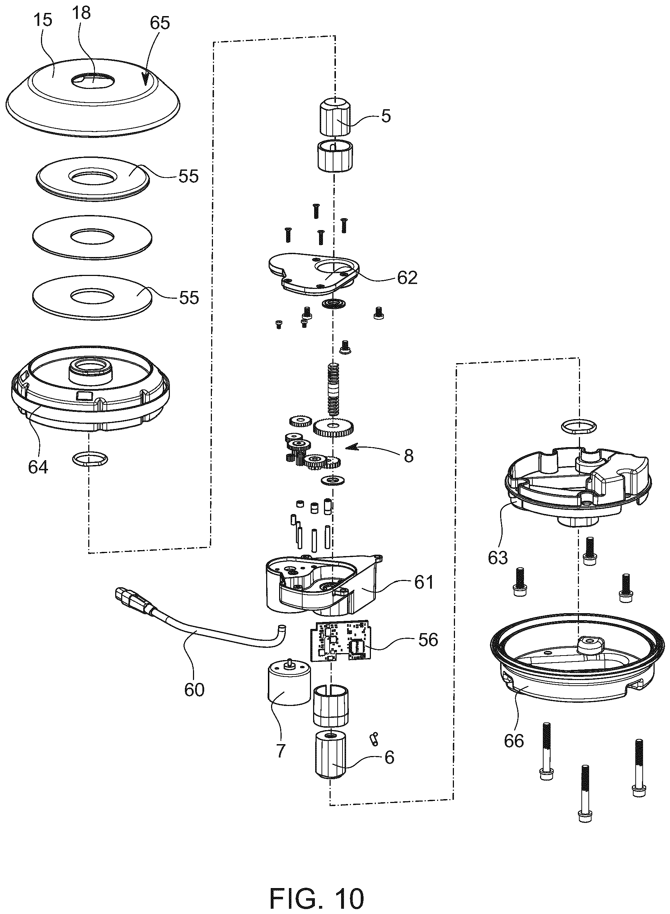

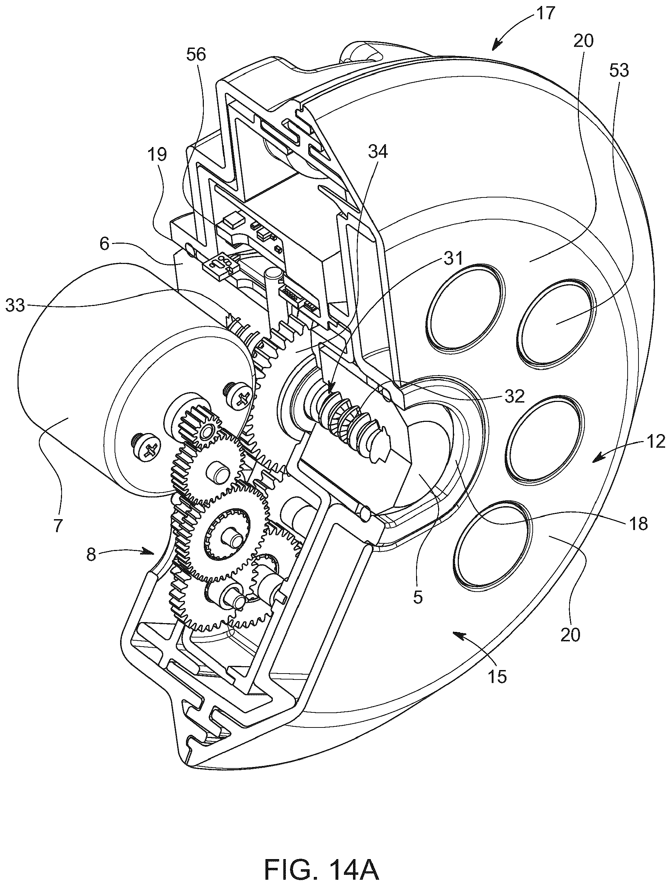

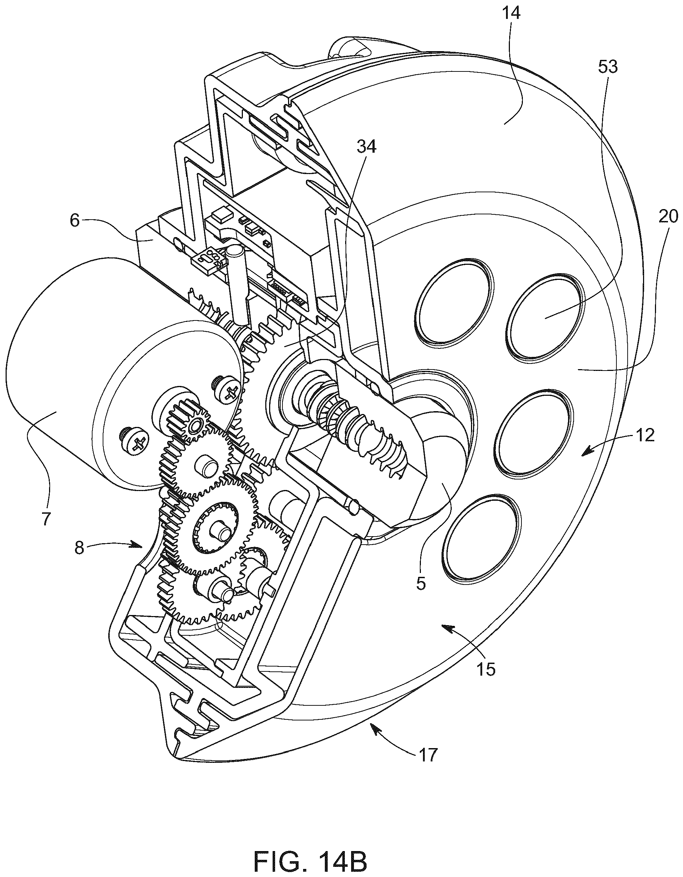

As further illustrated in Figs. 10, 11, and 14A to 16B, the locking housing 14 encloses the actuator 7, the drivetrain 8, at least a part of each locking pin 5, 6, and at least a part of the electric power receiver 12. The locking housing 14 has two opposed end walls 15, 16 and a peripheral wall 17, and each end wall 15, 16 has a central opening 18, 19 in which a respective locking pin 5, 6 is arranged extendable and retractable in relation to the end wall 15, 16 between its locked position and its unlocked position. As seen for instance in Figs. 14A and 14B, the electric power receiver 12 is arranged at a peripheral area 20 of a first one 15 of the end walls.

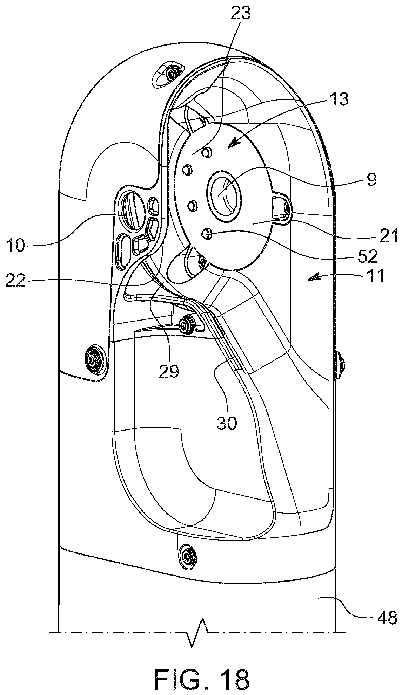

As illustrated in Figs. 6A to 6C, the receiving space 11 of each docking station 4 is adapted to receive the locking housing 14. As illustrated in more detail in Fig. 18, the receiving space 11 has two internally opposed and at least substantially parallel walls 21, 22 having a mutual distance allowing the end walls 15, 16 of the locking housing 14 to slide along the respective internally opposed walls 21, 22 of the receiving space 11. A corresponding locking recess 9, 10 is arranged centrally in each one of the internally opposed walls 21, 22 of the receiving space 11, and the electric power transmitter 13 is arranged at a peripheral area 23 of a first one 21 of the internally opposed walls 21, 22 of the receiving space 11.

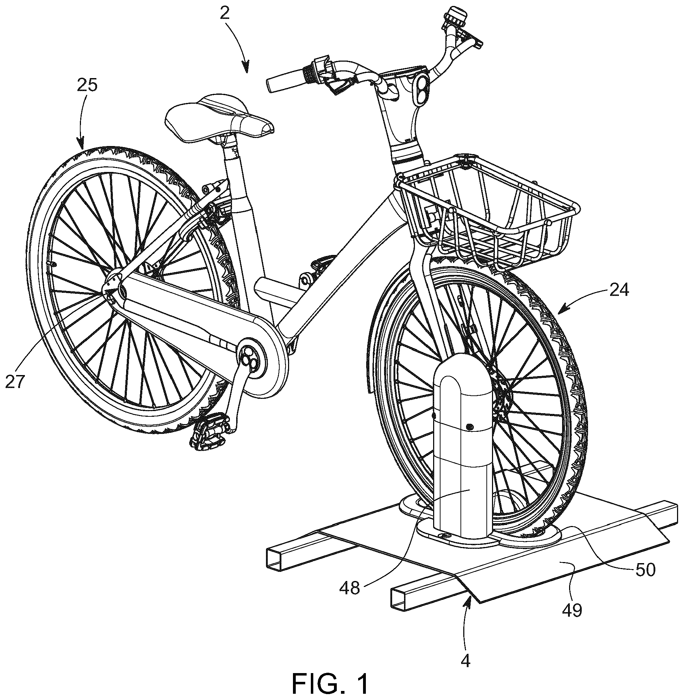

As understood from Figs. 1 and 6A, each micromobility device 2, 3 includes a front wheel 24 having a front wheel axis 26 and a rear wheel 25 having a rear wheel axis 27. The two opposed locking pins 5, 6 are displaceable along a locking pin axis 28, and, at least when the front wheel 26 axis is arranged in parallel with the rear wheel axis 27 (for driving straight ahead), it is preferred that the locking pin axis 28 is generally arranged in front of and generally parallel to the front wheel axis 26 as illustrated.

The front wheel axis and the rear wheel axis are spaced by a nominal wheel axis distance which is understood to be the distance between said axes when the front wheel 26 axis is arranged in parallel with the rear wheel axis 27 (for driving straight ahead).

The locking pin axis 28 is generally arranged at a nominal locking distance from the front wheel axis 26 which is understood to be the distance between said axes at least when the front wheel 26 axis is arranged in parallel with the rear wheel axis 27 (for driving straight ahead). The nominal locking distance is preferably smaller than 40 per cent, more preferred smaller than 30 per cent, and most preferred smaller than 20 per cent of the nominal wheel axis distance.

If the micromobility device storage system includes e-bikes 2, the nominal locking distance of the e-bikes 2 is preferably smaller than 25 per cent, more preferred smaller than 20 per cent, and most preferred smaller than 15 per cent of the nominal wheel axis distance.

According to the present invention, the locking housing 14 is at least partly disc-shaped, at least a part of the peripheral wall 17 of the locking housing has the form of an arc of a circle, and said part of the peripheral wall, in a locked position of the locking housing 14 in the receiving space 11 of the docking station 4, at least substantially matches a corresponding part of an internal peripheral wall 29 of the receiving space 11 also having the form of an arc of a circle. Thereby, the locking housing 14 may in a stable way be supported rotatably in the receiving space 11.

In the illustrated structurally advantageous embodiments, however, the locking housing 14 is generally disc-shaped, the entire peripheral wall 17 of the locking housing has the form of a circle, and the peripheral wall, in a locked position of the locking housing 14 in the receiving space 11 of the docking station 4, generally matches the internal peripheral wall 29 of the receiving space 11 also having the form of a circle. Preferably, in the unlocked position of the locking pins 5, 6, a distance between outer ends of the locking pins is less than 75 per cent, more preferred less than 65 per cent and most preferred less than 60 per cent of the maximum diameter of the locking housing 14. In the illustrated embodiments, said distance between the outer ends of the locking pins is about 1/2 of the maximum diameter of the locking housing 14.

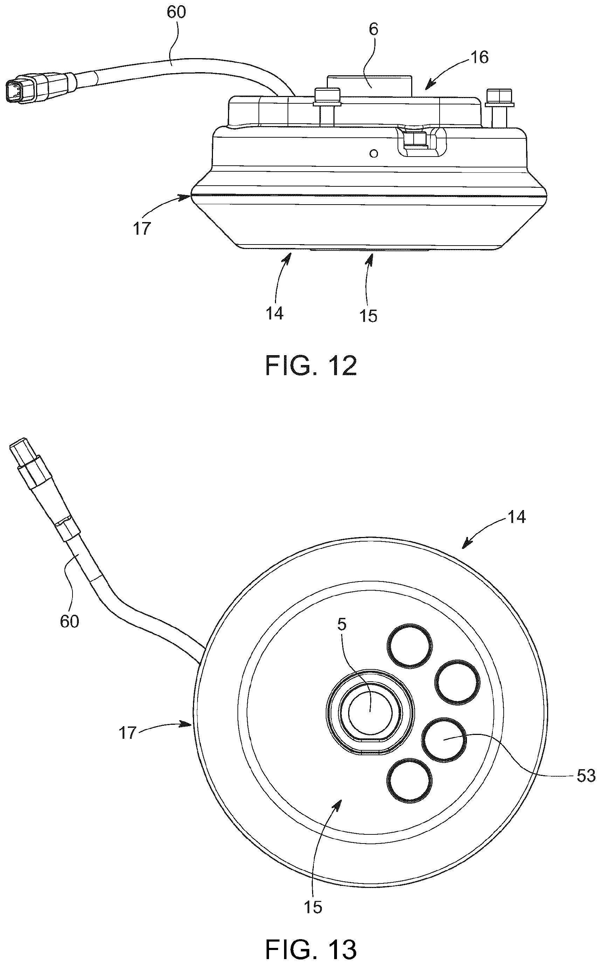

In Figs. 12, 14A, 16A, 18, it is seen that the peripheral wall 17 of the locking housing 14 has a radial cross-section forming a convex form matching a corresponding concave form of a corresponding part of an internal peripheral wall 29 of the receiving space 11. However, according to the present invention, the peripheral wall 17 of the locking housing, or at least a part thereof, may alternatively or additionally have a radial cross-section forming a concave form matching a corresponding convex form of a corresponding part of the internal peripheral wall 29 of the receiving space 11.

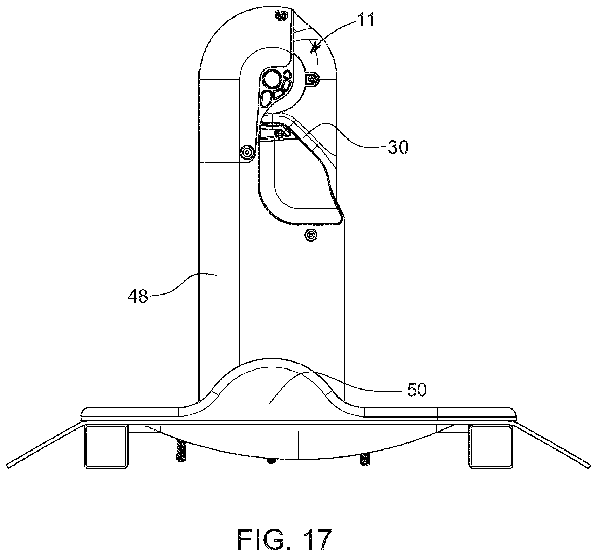

As seen in Figs. 6A, 17 and 18, each docking station 4 has an oblique ramp section 30 arranged below the receiving space 11 of the docking station 4 and leading up to said receiving space 11 for guidance of the peripheral wall 17 of the locking housing 14 into the receiving space 11. This is particularly advantageous, if a flat tyre should occur. As further seen in the figures, a cross-section of the ramp section 30 has a concave form corresponding to the concave form of the internal peripheral wall 29 of the receiving space 11.

The two opposed displaceable locking pins 5, 6 are driven between their locked position, as seen in Figs. 14B, 15B, 16B, and their unlocked position, as seen in Figs. 14A, 15A, 16A, by means of a drive spindle 31 having a first spindle part 32 engaging an internal thread of a first one 5 of the locking pins and a second spindle part 33 engaging an internal thread of a second one 6 of the locking pins. The first spindle part 32 has a different thread direction than the second spindle part 33, and a toothed wheel 34 forming part of the drivetrain 8 is arranged on the drive spindle 31 between the first spindle part 32 and the second spindle part 33. As further seen, the drivetrain 8 includes several further toothed wheels completing the drivetrain 8 between the electric motor 7 and the drive spindle 31.

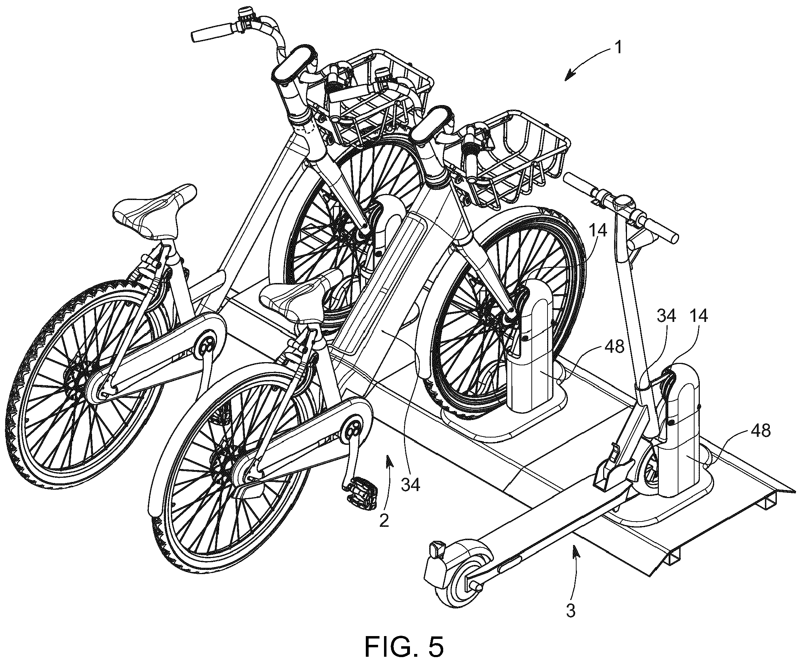

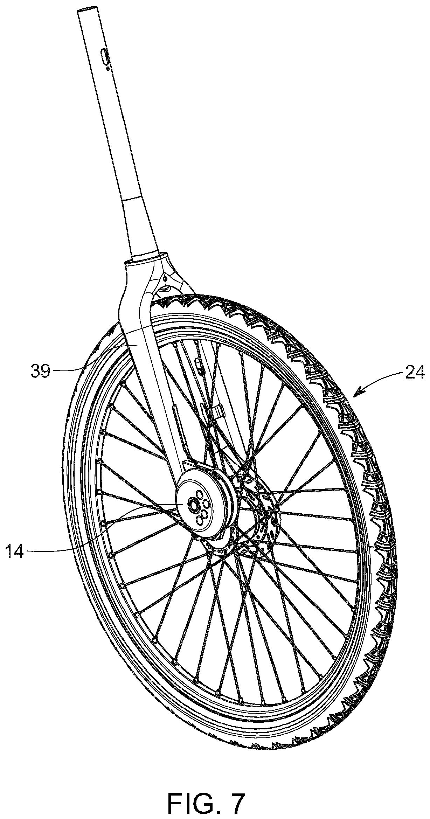

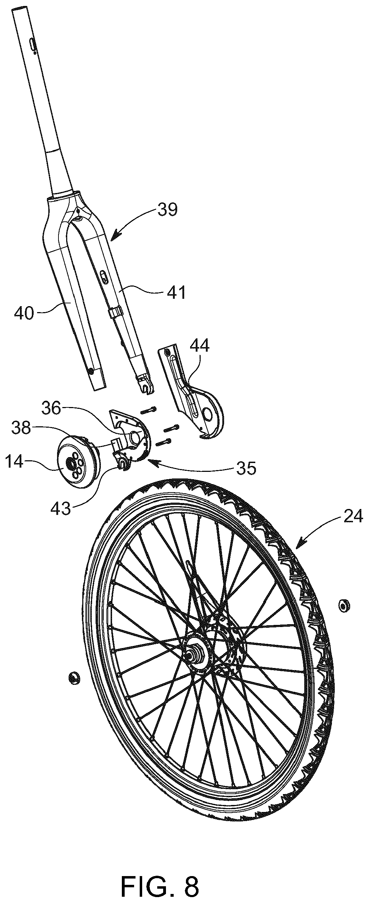

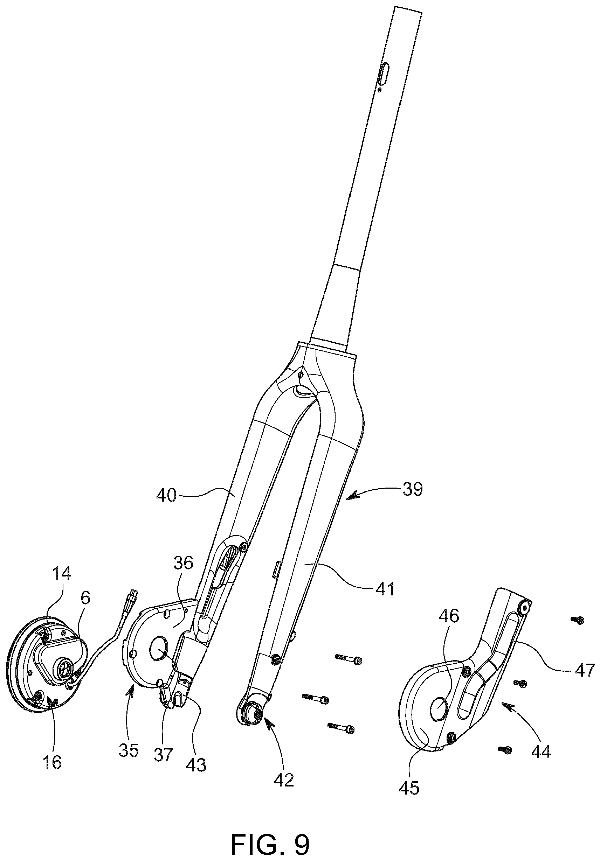

According to the present invention, each micromobility device 2, 3 has a frame 34, and the respective locking housing 14 is attached directly or indirectly to the frame of the micromobility device by means of a connecting bracket 35. When the respective locking housing 14 is connected directly to the frame, it may for instance be connected to a front part of the frame of an e-scooter, as seen in Fig. 5. When the respective locking housing 14 is connected indirectly to the frame, it may for instance be connected to the frame via a bike fork 39, as seen for instance in Figs. 6A and 7. As seen in Figs. 8 and 9, the connecting bracket 35 may include a plate-formed part 36 matching and being arranged on a second one 16 of the end walls of the locking housing 14. Said plate-formed part 36 may have a central opening 37 through which a respective locking pin 6 may project, and the connecting bracket 35 may include a connector 38 connecting indirectly to the frame 34 via the bike fork 39.

As further seen in Figs. 8 and 9, the bike fork 39 holds a front wheel 24, and the bike fork 39 has a first fork blade 40 and a second fork blade 41 joined at their top. Each fork blade has a fork end 42 holding an end of an axle of the front wheel, and said connecting bracket 35 includes an axle holding part 43 forming the fork end of the first fork blade 40. The connector 38 of said connecting bracket 35 has the form of a fork blade connector connected to a lower end of the first fork blade 40.

Furthermore, a connecting bracket cover 44 includes a plate-formed part 45 covering the plate-formed part 36 of the connecting bracket 35. The plate-formed part 45 of the connecting bracket cover 44 has a central opening 46 through which the respective locking pin 6 may project, and the connecting bracket cover 44 includes a fork blade covering part 47 covering an inner side (opposed to the second fork blade 41) of the lower end of the first fork blade 40.

Important structural parts of the micromobility device storage system 1, and in particular of the locking device, such as the locking housing 14 and associated parts, as well as of the docking station 4, such as housing parts forming the stand 48, are preferably made of metal in order to provide sufficient strength. However, other suitable materials such as plastic may be used, and the various parts of the system may generally be made from any material suitable for the specific part.

It is noted that the micromobility device storage system may in particular also be adapted to store normal pedal-driven bicycles. Each such pedal-driven bicycle may be provided with a locking housing 14 being identical to the locking housings of the other micromobility devices of the system, apart from not being provided with an electrical power receiver.

Furthermore, the micromobility device storage system may also include docking stations without charging capabilities. Such docking stations without charging capabilities may be identical to the docking stations with charging capabilities, apart from not being provided with an electric power transmitter.

As understood from Fig. 5 and many other of the figures, the locking housing 14 may advantageously be mounted on the micromobility device 2, 3 extending somewhat sidewards from a general longitudinal plane of the micromobility device 2, 3. In the figures, the locking housing 14 is illustrated as mounted on the micromobility device 2, 3 extending to the right of such general longitudinal plane of the micromobility device 2, 3, when seen in the forward driving direction. However, referring to Fig. 5, it is understood that, in particular in the case of e-scooters, the locking housing 14 could also be mounted on the micromobility device 2, 3 at or in such general longitudinal plane of the micromobility device 2, 3.

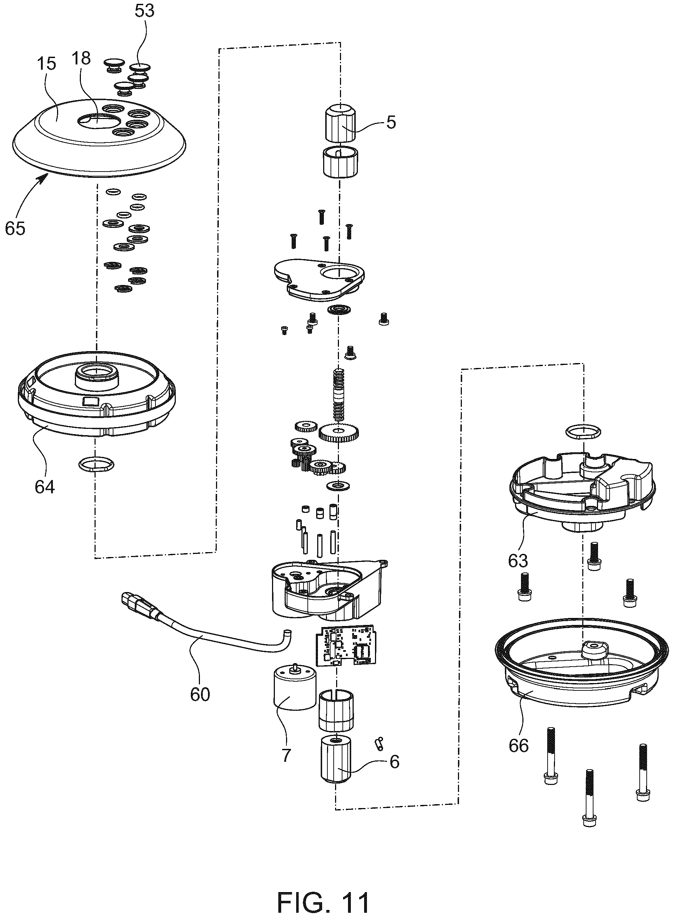

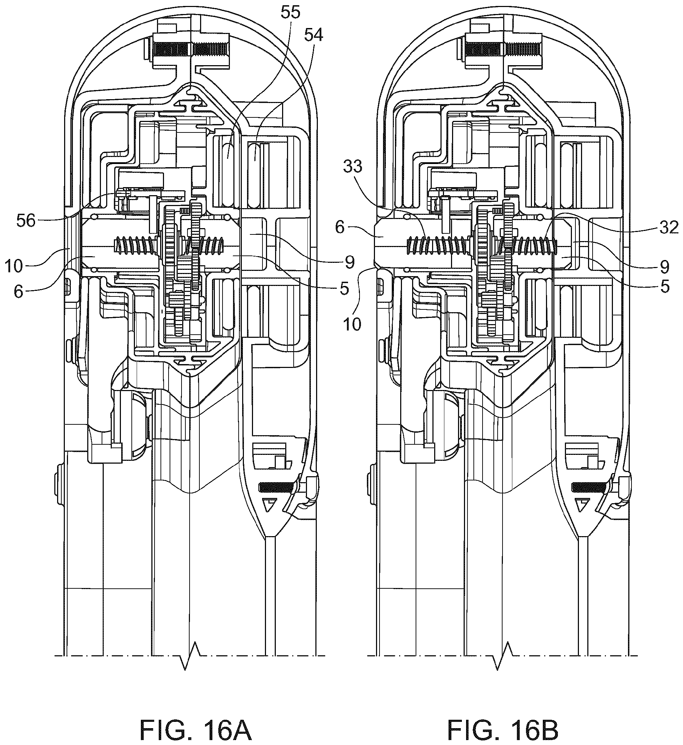

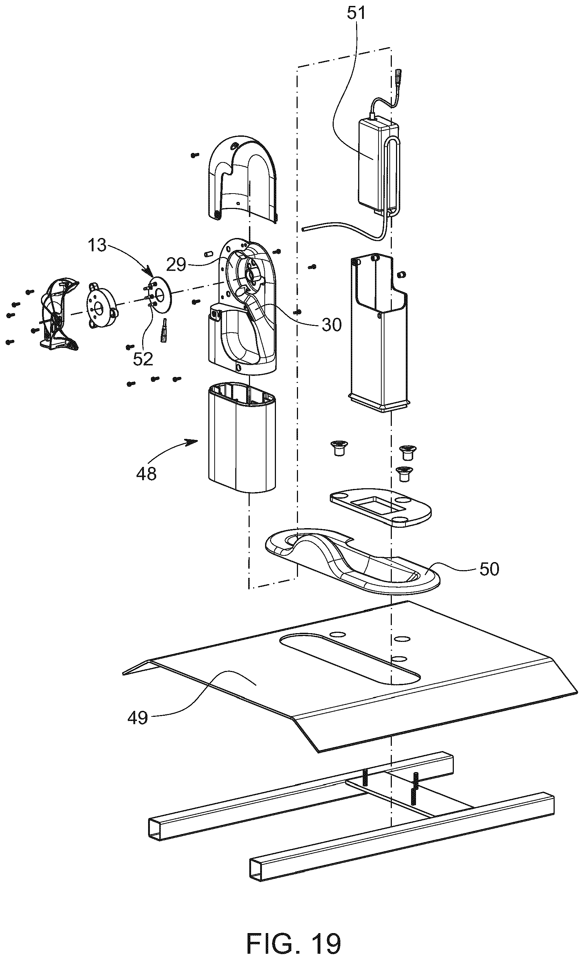

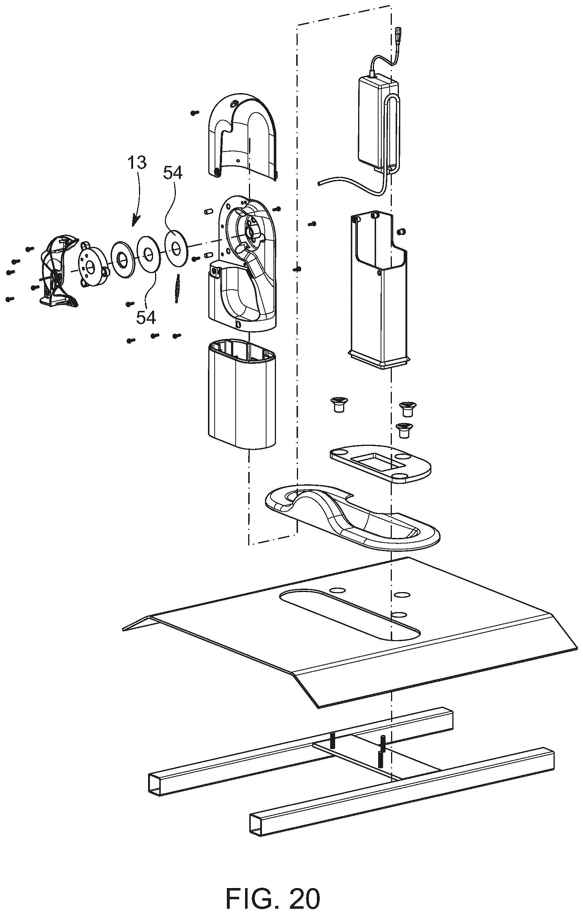

Furthermore, as seen in the figures, a large number of docking stations 4 may be mounted in rows in different ways, thereby forming, together with a number of micromobility devices, a micromobility device storage system according to the present invention. As seen, docking stations 4 preferably includes a stand 48 mounted on a baseplate 49. The baseplate 49 preferably includes a wheel guide 50 forming a slot for a front wheel of a micromobility device. As seen in Figs. 19 and 20, the stand 48 may include a power adapter 51 providing electric power for the electric power transmitter 13 of the docking station 4. In the embodiment illustrated in Fig. 19, the electric power transmitter 13 includes so-called pogo pins 52, i.e. spring loaded contact pins, for creating electric contact to contact pads 53 of the electric power receiver 12 of the locking housing 14 as seen in the embodiment of Figs. 11, 13 and 14A. In the embodiment illustrated in Fig. 20, the electric power transmitter 13 includes electric coils 54 for creating a magnetic field which may create electric current in electric coils 55 of the locking housing 14 as seen in the embodiment of Figs. 10, 16A and 16B.

The receiving space 11 of each docking station 4 is formed in a top area of the respective stand 48. According to the present invention, each stand 48 may have a reduced height as compared to known solutions, thereby saving materials. As seen, the height of each stand 48 may correspond to, for instance, less than 130 or even less than 120 per cent of the distance from a front wheel axis 28 of a respective e-bike 2 to the ground.

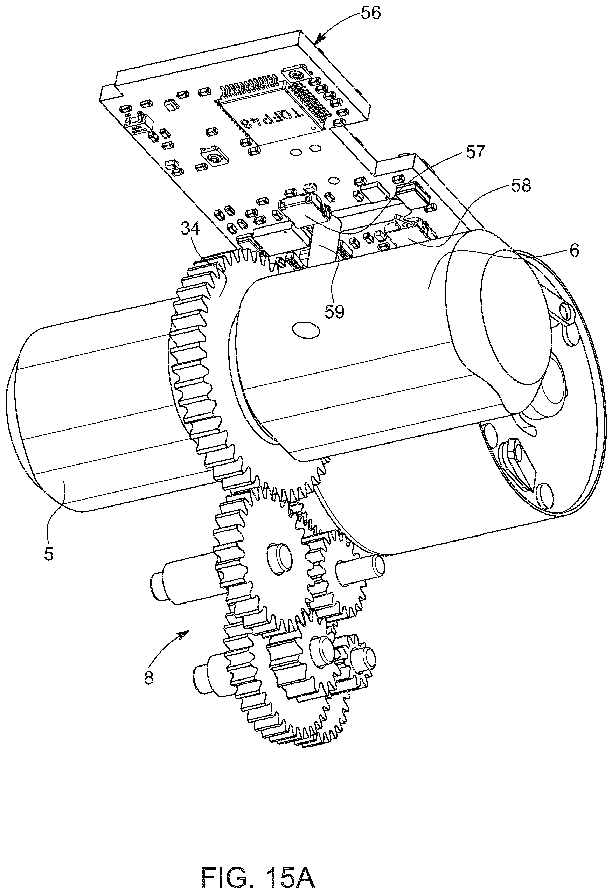

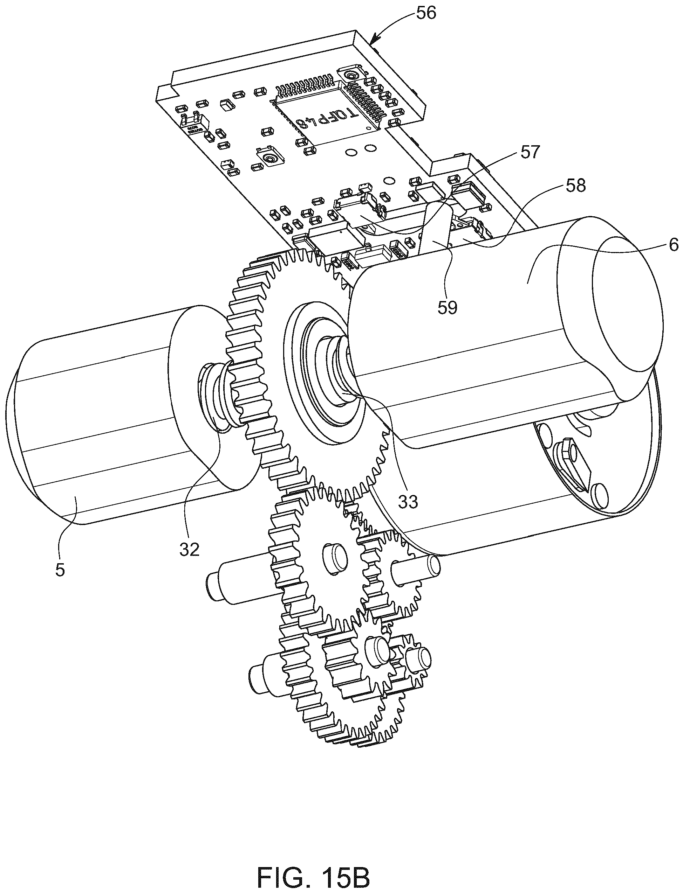

As seen in Figs. 15A and 15B, the locking housing 14 may further include a printed circuit board 56 including control electronics for the locking function, charging and communication between the micromobility device and the docking station. The system may among other features include app control for controlling the locking function of the micromobility devices, charging, etc. As seen, the printed circuit board 56 may include micro switches 57, 58 adapted to sense end positions of one 6 of the locking pins by means of a switch pin 59 extending at right angles from the locking pin 6. Thereby, the control electronics may stop the actuator at the end positions of the locking pins.

As seen in Figs. 10 and 11, the locking housing 14 may further include gear housing parts 61, 62 including the drive train 8 and internal locking housing parts 63, 64 forming the locking housing 14 together with a first outer end cap 65 forming the first one 15 of the end walls of the locking housing 14 and a second outer end cap 66.

As seen in Figs. 12 and 13, the locking housing 14 may include a cable 60 adapted to transfer electric power to an electric motor of the micromobility device.

## Claims

1. A micromobility device storage system (1) including a number of micromobility devices (2, 3), such as e-bikes or e-scooters, and a number of docking stations (4) for the micromobility devices, each micromobility device (2, 3) being provided with a locking device for engagement with a docking station (4), each locking device including two opposed displaceable locking pins (5, 6) which by means of an actuator (7) and a drivetrain (8) are operable between a locked position in which the locking pins (5, 6) are at least partially extended from the locking device in order to engage corresponding locking recesses (9, 10) arranged in a receiving space (11) of a docking station (4) and an unlocked position in which the locking pins (5, 6) are at least partially retracted into the locking device in order to disengage the corresponding locking recesses (9, 10) of the docking station (4), each locking device including an electric power receiver (12) adapted to receive electric power from a corresponding electric power transmitter (13) of the docking station (4), **characterised in that** each locking device is arranged in a separate locking housing (14) attached to the respective micromobility device (2, 3), **in that** the locking housing (14) encloses the actuator (7), the drivetrain (8), at least a part of each locking pin (5, 6), and at least a part of the electric power receiver (12), **in that** the locking housing (14) has two opposed end walls (15, 16) and a peripheral wall (17), **in that** each end wall (15, 16) has a central opening (18, 19) in which a respective locking pin (5, 6) is arranged extendable and retractable in relation to the end wall (15, 16) between its locked position and its unlocked position, **in that** the electric power receiver (12) is arranged at a peripheral area (20) of at least a first one (15) of the end walls, **in that** the receiving space (11) of each docking station (4) is adapted to receive the locking housing (14), **in that** the receiving space (11) has two internally opposed and at least substantially parallel walls (21, 22) having a mutual distance allowing the end walls (15, 16) of the locking housing (14) to slide along the respective internally opposed walls (21, 22) of the receiving space (11), **in that** a corresponding locking recess (9, 10) is arranged centrally in each one of the internally opposed walls (21, 22) of the receiving space (11), and **in that** the electric power transmitter (13) is arranged at a peripheral area (23) of at least a first one (21) of the internally opposed walls (21, 22) of the receiving space (11).

2. A micromobility device storage system according to claim 1, wherein each micromobility device (2, 3) includes a front wheel (24) having a front wheel axis (26) and a rear wheel (25) having a rear wheel axis (27), wherein the two opposed locking pins (5, 6) are displaceable along a locking pin axis (28), and wherein, at least when the front wheel (26) axis is arranged in parallel with the rear wheel axis (27), the locking pin axis (28) is generally arranged in front of and generally parallel to the front wheel axis (26).

3. A micromobility device storage system according to claim 1 or 2, wherein each micromobility device (2, 3) includes a front wheel (24) having a front wheel axis (26) and a rear wheel (25) having a rear wheel axis (27), the front wheel axis and the rear wheel axis being spaced by a nominal wheel axis distance, wherein the two opposed locking pins (5, 6) are displaceable along a locking pin axis (28), wherein the locking pin axis (28) is generally arranged at a nominal locking distance from the front wheel axis (26), and wherein the nominal locking distance is smaller than 40 per cent, preferably smaller than 30 per cent, and most preferred smaller than 20 per cent of the nominal wheel axis distance.

4. A micromobility device storage system according to claim 3, wherein at least some of the micromobility devices are e-bikes (2), and wherein, for the e-bikes, the nominal locking distance is smaller than 25 per cent, preferably smaller than 20 per cent, and most preferred smaller than 15 per cent of the nominal wheel axis distance.

5. A micromobility device storage system according to any one of the preceding claims, wherein the locking housing (14) is at least partly disc-shaped, wherein at least a part of the peripheral wall (17) of the locking housing has the form of an arc of a circle, and wherein said part of the peripheral wall, in a locked position of the locking housing (14) in the receiving space (11) of the docking station (4), at least substantially matches a corresponding part of an internal peripheral wall (29) of the receiving space (11) also having the form of an arc of a circle.

6. A micromobility device storage system according to any one of the preceding claims, wherein the locking housing (14) is generally disc-shaped and has a maximum diameter, wherein, in the unlocked position of the locking pins (5, 6), a distance between outer ends of the locking pins is less than 75 per cent, preferably less than 65 per cent and most preferred less than 60 per cent of the maximum diameter of the locking housing (14).

7. A micromobility device storage system according to any one of the preceding claims, wherein at least a part of the peripheral wall (17) of the locking housing has a radial cross-section forming a concave or a convex form matching a corresponding concave or convex form of a corresponding part of an internal peripheral wall (29) of the receiving space (11).

8. A micromobility device storage system according to any one of the preceding claims, wherein each docking station (4) has an oblique ramp section (30) arranged below the receiving space (11) of the docking station (4) and leading up to said receiving space (11).

9. A micromobility device storage system according to claim 7 and 8, wherein a cross-section of the ramp section (30) has a concave or a convex form corresponding to the concave or convex form of said part of the internal peripheral wall (29) of the receiving space (11).

10. A micromobility device storage system according to any one of the preceding claims, wherein the two opposed displaceable locking pins (5, 6) are driven between their locked position and their unlocked position by means of a drive spindle (31) having a first spindle part (32) engaging an internal thread of a first one (5) of the locking pins and a second spindle part (33) engaging an internal thread of a second one (6) of the locking pins, wherein the first spindle part (32) has a different thread direction than the second spindle part (33), and wherein a toothed wheel (34) forming part of the drivetrain (8) is arranged on the drive spindle (31) between the first spindle part (32) and the second spindle part (33).

11. A micromobility device storage system according to any one of the preceding claims, wherein each micromobility device (2, 3) has a frame (34), wherein the respective locking housing (14) is attached directly or indirectly to the frame of the micromobility device by means of a connecting bracket (35) including a plate-formed part (36) matching and being arranged on a second one (16) of the end walls of the locking housing (14), wherein said plate-formed part (36) has a central opening (37) through which a respective locking pin (6) may project, and wherein the connecting bracket (35) includes a connector (38) connecting directly or indirectly to the frame (34).

12. A micromobility device storage system according to claim 11, wherein at least some of the micromobility devices are e-bikes (2) having a bike fork (39) holding a front wheel (24), wherein the bike fork (39) has a first fork blade (40) and a second fork blade (41) joined at their top, wherein each fork blade has a fork end (42) holding an end of an axle of the front wheel, wherein said connecting bracket (35) includes an axle holding part (43) forming the fork end of the first fork blade (40), and wherein the connector (38) of said connecting bracket (35) has the form of a fork blade connector connected to a lower end of the first fork blade (40).

13. A micromobility device storage system according to claim 12, wherein a connecting bracket cover (44) includes a plate-formed part (45) covering the plate-formed part (36) of the connecting bracket (35), wherein the plate-formed part (45) of the connecting bracket cover (44) has a central opening (46) through which the respective locking pin (6) may project, and wherein the connecting bracket cover (44) includes a fork blade covering part (47) covering an inner side of the lower end of the first fork blade (40).
